# EUROPÄISCHE PATENTSCHRIFT

(11) **EP 3 424 297 B1**
(45) Veröffentlichungstag und Bekanntmachung des Hinweises auf die Patenterteilung: **07.09.2022**
(21) Anmeldenummer: 17179678.2
(22) Anmeldetag: 04.07.2017
(51) Int. Cl.: A01G 3/08, A01G 23/099, B23D 59/00, A01G 23/08

(54) **VERFAHREN ZUM ASSISTIEREN BEIM AUSFÜHREN EINER SCHNITTFOLGE IN EINEN BAUM UND SYSTEM ZUM ASSISTIEREN BEIM AUSFÜHREN EINER SCHNITTFOLGE IN EINEN BAUM**
METHOD OF PROVIDING ASSISTANCE WHEN APPLYING A SEQUENCE OF CUTS TO A TREE AND SYSTEM FOR PROVIDING ASSISTANCE WHEN APPLYING A SEQUENCE OF CUTS TO A TREE
PROCÉDÉ D'ASSISTANCE LORS DE L'EXÉCUTION D'UNE SÉQUENCE DE COUPE SUR UN ARBRE ET SYSTÈME D'ASSISTANCE LORS DE L'EXÉCUTION D'UNE SÉQUENCE DE COUPE SUR UN ARBRE

(43) Veröffentlichungstag der Anmeldung: 09.01.2019
(73) Patentinhaber: Andreas Stihl AG & Co. KG, 71336 Waiblingen (DE)
(72) Erfinder: Mang, Harald, 71364 Winnenden (DE); Frey, Benjamin, 73663 Berglen (DE); Kugel, Steffen, 70736 Fellbach (DE); Tippelt, Martin, 71111 Waldenbuch (DE); Reinert, Michael, 73635 Rudersberg (DE); Hollmeier, Friedrich, 73635 Rudersberg (DE); Jaeger, Dirk, 35116 Hatzfeld (DE); Eppinger, Andreas, 70599 Stuttgart (DE); Krämer Fernandez, Antonio, 70180 Stuttgart (DE); Süpple, Steffen, 70374 Stuttgart (DE); Maier, Bettina, 72072 Tübingen (DE); Eppinger, Florian, 44801 Bochum (DE)
(74) Vertreter: Patentanwälte Ruff, Wilhelm, Beier, Dauster & Partner mbB

(56) Entgegenhaltungen:
- EP-A1- 2 990 169
- DE-A1-102004 002 747
- DE-A1-102008 027 185
- DE-A1-102009 019 980
- DE-A1-102011 100 016
- US-A1- 2015 360 305

## Beschreibung

### ANWENDUNGSGEBIET

Die Erfindung bezieht sich auf ein Verfahren zum Assistieren beim Ausführen einer Schnittfolge in einen Baum und ein System zum Assistieren beim Ausführen einer Schnittfolge in einen Baum.

Insbesondere ist aus der DE 10 2004 002 747 A1 eine Vorrichtung zum Erkennen einer gewünschten Länge eines Teilabschnitts eines von Hand zu bearbeitenden Werkstoffs bekannt. An einem Gerät selbst ist eine optische Hilfe befestigt. Als optische Hilfe dient hierbei ein Laserpunkt. Erreicht man auf dem zu sägenden Werkstoff die gewünschte Länge bei seitlichem Verschieben mit dem so ausgestatteten Arbeitsgerät, so erscheint der Laserpunkt am Ende eines zu sägenden Teilstücks, wenn die gewünschte Länge erreicht wurde.

Des Weiteren ist aus der DE 10 2011 100 016 A1 eine Anzeigevorrichtung zur Längenmessung von Werkstücken, die einer Motorkettensäge zugeordnet ist, bekannt.

Außerdem ist aus der DE 10 2008 027 185 A1 ein handgeführtes Arbeitsgerät bekannt, das eine Einrichtung zur Bestimmung der Position und/oder der Entfernung des Arbeitsgeräts relativ zu mindestens einem Referenzpunkt besitzt.

Weiter ist aus der US 2015/0360305 A1 ein Markieren eines ersten Schnitts, ein Detektieren einer vorbestimmten Länge bei Bewegung entlang des Werkstücks und ein Informieren eines Benutzers über das Detektieren bekannt. Somit kann der Benutzer einen zweiten Schnitt ausführen.

Zudem ist aus der DE102009019980A1 ein Verfahren zum Fällen eines Baumes und ein Zirkel zur Bestimmung des Austrittspunktes der Bruchkantenlinie bei Durchführung des Verfahrens bekannt.

Des Weiteren ist aus der EP 2 990 169 A1 ein Holz-Arbeits-Gerät und ein Verfahren zum Betreiben bekannt.

### AUFGABE UND LÖSUNG

Der Erfindung liegt als Aufgabe die Bereitstellung eines Verfahrens zum Assistieren beim Ausführen einer Schnittfolge in einen Baum und eines Systems zum Assistieren beim Ausführen einer Schnittfolge in einen Baum zugrunde, das jeweils eine Sicherheit beim Ausführen der Schnittfolge verbessert und/oder ein Vermeiden von ungewollten Schäden, insbesondere des Baums, erleichtert.

Die Erfindung löst diese Aufgabe durch die Bereitstellung eines Verfahrens mit den Merkmalen des Anspruchs 1. Des Weiteren wird die der Erfindung zugrundeliegende Aufgabe durch ein System mit den Merkmalen des Anspruchs 7 gelöst. Vorteilhafte Weiterbildungen und/oder Ausgestaltungen der Erfindung sind in den abhängigen Ansprüchen beschrieben.

Das erfindungsgemäße, insbesondere automatische, Verfahren zum Assistieren oder Unterstützen beim Ausführen einer Schnittfolge in einen Baum, wobei bei der Schnittfolge auf einen ersten Schnitt in den Baum ein zweiter Schnitt in den Baum folgt, wobei mindestens ein Teil eines idealen Verlaufs des zweiten Schnitts von mindestens einem Teil eines Verlaufs des ersten Schnitts abhängt, weist die Schritte auf: a) Erfassen, insbesondere automatisches Erfassen, mindestens des Teils des Verlaufs des ersten Schnitts, insbesondere während und/oder nach einem Ausführen des ersten Schnitts. b) Vorausberechnen, insbesondere automatisches Vorausberechnen, mindestens des Teils des idealen Verlaufs des zweiten Schnitts in den Baum basierend auf dem erfassten Teil des Verlaufs des ersten Schnitts. c) Ausgeben, insbesondere automatisches Ausgeben, einer Schneidinformation zum Ausführen des zweiten Schnitts basierend auf dem vorausberechneten Teil des idealen Verlaufs des zweiten Schnitts. Das Verfahren weist den Schritt auf: Bereitstellen, insbesondere Erfassen, einer geometrischen Eigenschaft des Baums. Der Schritt b) weist auf: Vorausberechnen mindestens des Teils des idealen Verlaufs des zweiten Schnitts in Abhängigkeit von der bereitgestellten geometrischen Eigenschaft. Das Verfahren weist die Schritte auf: d) Erfassen, insbesondere automatisches Erfassen, mindestens eines Teils eines Verlaufs des zweiten Schnitts während seines Ausführens und/oder Erfassen einer Position und/oder einer Orientierung eines den zweiten Schnitt ausführenden Schneidgeräts während des Ausführens. e) Vergleichen, insbesondere automatisches Vergleichen, des erfassten Teils mit dem vorausberechneten Teil des idealen Verlaufs des zweiten Schnitts und/oder Vergleichen der erfassten Position und/oder der erfassten Orientierung des Schneidgeräts mit einer idealen Position und/oder einer idealen Orientierung des Schneidgeräts basierend auf dem vorausberechneten Teil des idealen Verlaufs, insbesondere während des Schritt d). f) Ausgeben, insbesondere automatisches Ausgeben, einer weiteren Schneidinformation zum Ausführen des zweiten Schnitts basierend auf dem Vergleich während des Schritt d).

Das Verfahren ermöglicht eine Sicherheit beim Ausführen der Schnittfolge zu verbessern, insbesondere für einen die Schnittfolge ausführenden Forstarbeiter. Zusätzlich oder alternativ ermöglicht das Verfahren ein Vermeiden von ungewollten Schäden, insbesondere des Baums, zu erleichtern. Somit kann ein maximaler wirtschaftlicher Gewinn mit dem Baum erzielt werden. Weiter zusätzlich oder alternativ ermöglicht das Verfahren, ein Abweichen von dem mindestens einen Teil des idealen Verlaufs des zweiten Schnitts beim Ausführen des zweiten Schnitts zu vermeiden oder bei einer Abweichung auf den idealen Verlauf wieder zurückzukehren.

Insbesondere kann die Schnittfolge in einen Baumstamm des Baums und/oder in einen oder mehrere Äste des Baums erfolgen. Insbesondere kann die Schnittfolge zu einem Durchtrennen des Baums führen, insbesondere seines Baumstamms und/oder seiner Äste. Der Baumstamm kann stehend sein, insbesondere lebend, oder gefällt, insbesondere liegend. Der eine oder die mehreren Äste können an dem Baumstamm angeordnet sein.

Ein Abweichen von dem mindestens einen Teil des idealen Verlaufs des zweiten Schnitts beim Ausführen des zweiten Schnitts kann dazu führen, dass sich der Baum, insbesondere sein Baumstamm und/oder sein Ast, anders verhalten kann, als gewollt sein kann. Insbesondere kann das Abweichen dadurch verursacht sein, dass der mindestens eine Teil des idealen Verlaufs relativ schwer in Erfahrung gebracht werden kann oder sogar unbekannt sein kann. Beispielsweise kann dann der Baum ungewollt auf etwas fallen und/oder einklemmen. Des Weiteren kann sich eine Spannung des Baums entladen und der Baum kann ausschlagen, und dabei insbesondere den Forstarbeiter verletzen. Außerdem kann der Baum, insbesondere sein Baumstamm, aufreißen und/oder splittern. Dies kann einen mit dem Baum erzielbaren wirtschaftlichen Gewinn schmälern. Durch das Ausgeben der Schneidinformation kann ein Risiko, dass diese Nachteile eintreten, verringert oder sogar vermieden werden.

Der mindestens eine Teil des idealen Verlaufs des zweiten Schnitts kann von dem mindestens einen Teil des Verlaufs des ersten Schnitts dadurch abhängen, dass der zweite Schnitt zumindest teilweise eine relative Position und/oder eine relative Orientierung zu dem ersten Schnitt beziehungsweise seines Teils aufweisen sollte. Insbesondere kann der ideale, insbesondere vollständige, Verlauf des zweiten Schnitts von dem, insbesondere vollständigen, Verlauf des ersten Schnitts abhängig sein.

Der Teil des Verlaufs kann insbesondere ein Anfang oder ein Ende, insbesondere eine Endlinie des Verlaufs sein.

Der zweite Schnitt beziehungsweise sein Verlauf kann von dem ersten Schnitt beziehungsweise seinem Verlauf verschieden sein.

Der Schritt b) kann zeitgleich mit dem Schritt a) und/oder zeitlich nach diesem ausgeführt werden. Der Schritt c) kann zeitgleich mit dem Schritt b) und/oder zeitlich nach diesem ausgeführt werden.

Insbesondere kann die geometrische Eigenschaft des Baums den Durchmesser des Baumstamms, soweit vorhanden, aufweisen oder sein.

Die weitere Schneidinformation kann eine Anweisung zum Zurückkehren, insbesondere eine Positionsanweisung und/oder eine Orientierungsanweisung, aufweisen. Zusätzlich oder alternativ kann die weitere Schneidinformation eine Anweisung zum Beenden des Ausführens des zweiten Schnitts aufweisen. Die weitere Schneidinformation kann wie die Schneidinformation ausgegeben werden.

In einer Weiterbildung der Erfindung weist der Schritt a) auf: Erfassen des Teils des Verlaufs des ersten Schnitts und/oder Erfassen einer Position und/oder einer Orientierung beziehungsweise Ausrichtung eines den ersten Schnitt ausführenden Schneidgeräts, insbesondere während des Ausführens, mittels optischen Erfassens, insbesondere in Kombination mit Photogrammetrie, und/oder mittels inertialen Messens und/oder mittels einer Wasserwage und/oder mittels eines Kompass und/oder mittels lokalen Positionsbestimmens und/oder mittels Satelliten-Positionsbestimmens. Insbesondere kann der Teil des Verlaufs des ersten Schnitts durch Positionskoordinaten und/oder Orientierungswinkel beschrieben werden. Dies kann auch für den mindestens einen Teil des Verlaufs des zweiten Schnitts gelten. Die Positionskoordinaten und/oder die Orientierungswinkel können durch jeweils mindestens eine der genannten Techniken erfasst werden. Basierend auf der erfassten Position und/oder der erfassten Orientierung des Schneidgeräts kann der mindestens eine Teil des Verlaufs ermittelt, insbesondere erfasst, werden. Insbesondere kann eine räumliche Ausdehnung beziehungsweise Erstreckung des Schneidgeräts berücksichtigt werden. Insbesondere kann aus verschiedenen Erfassungspositionen und/oder mit Tiefeninformation optisch erfasst werden. Die geometrische Eigenschaft kann insbesondere durch jeweils mindestens eine der zuvor beschrieben Techniken zum Erfassen des mindestens einen Teils des Verlaufs des ersten Schnitts erfasst werden.

In einer Weiterbildung der Erfindung sind der erste Schnitt und/oder der zweite Schnitt ausgewählt aus einer Gruppe bestehend aus: ein Fallkerbsohlenschnitt, ein Fallkerbdachschnitt, ein Fällschnitt, ein Entlastungsschnitt und ein Trennschnitt. Der Fallkerbsohlenschnitt, der Fallkerbdachschnitt und der Fällschnitt können ein Fällen des Baums ermöglichen. Der Entlastungsschnitt und der Trennschnitt können ein Durchtrennen des Baums beziehungsweise seines Baumstamms, der unter Spannung stehen kann ermöglichen. Der Fallkerbsohlenschnitt kann oder sollte waagrecht in den Baum beziehungsweise in seinen Baumstamm verlaufen. Der Fallkerbsohlenschnitt kann oder sollte ein Fünftel bis ein Drittel eines Durchmessers des Baumstamms haben. Der Fallkerbdachschnitt kann unter einem Winkel von mindestens 45 Grad zur Waagrechten von oben in den Baum beziehungsweise in seinen Baumstamm verlaufen. Der Fallkerbdachschnitt kann oder sollte ein Fünftel bis ein Drittel eines Durchmessers des Baumstamms haben. Einer der Fallkerbschnitte kann von unten in den Baum verlaufen. In diesem Fall kann er als Humboldt-Schnitt bezeichnet werden. Der gespannte Baum beziehungsweise sein Baumstamm kann eine Druck- und eine Zugseite aufweisen. Der Entlastungsschnitt kann auf der Druckseite in den Baum führen. Der Trennschnitt kann auf der Zugseite in den Baum führen. Zusätzlich kann die Gruppe bestehen aus: einem Splintschnitt, einem Fallkerbmaulschnitt, einem Haltebandschnitt und/oder einem Sicherheitsbandschnitt.

In einer Ausgestaltung der Erfindung weist der Schritt b) auf: Vorausberechnen mindestens des Teils des idealen Verlaufs des zweiten Schnitts derart, dass der Fallkerbdachschnitt als zweiter Schnitt den Fallkerbsohlenschnitt als ersten Schnitt in einer Fallkerbsehne trifft und/oder dass der Fallkerbsohlenschnitt als zweiter Schnitt den Fallkerbdachschnitt als ersten Schnitt in der Fallkerbsehne trifft und/oder dass der Fällschnitt als zweiter Schnitt einen horizontalen Versatz und einen vertikalen Versatz zu dem Fallkerbsohlenschnitt oder dem Fallkerbdachschnitt als ersten Schnitt aufweist und/oder dass der Trennschnitt als zweiter Schnitt den Entlastungsschnitt als ersten Schnitt trifft. Der Fallkerbsohlenschnitt beziehungsweise sein Verlauf und der Fallkerbdachschnitt beziehungsweise sein Verlauf sollten sich genau in der Fallkerbsehne treffen und keiner der beiden Schnitte beziehungsweise Verläufe sollte über den anderen hinausgehen. Denn dann können der Fallkerbsohlenschnitt und der Fallkerbdachschnitt einen Fallkerb beziehungsweise einen Fallkeil bilden, insbesondere zum sicheren Fällen des Baums. Der Fallkerb kann in der Regel eine Fallrichtung des Baumes bestimmen und kann dazu dienen, ein Kippen des Baums in eine gewünschte Richtung zu ermöglichen. Zusätzlich kann oder sollte der Fallkerbdachschnitt beziehungsweise sein Verlauf mindestens einen Winkel von 45 Grad zum Fallkerbsohlenschnitt beziehungsweise seinem Verlauf aufweisen, um so eine ausreichend große Öffnung zu bekommen. So kann sichergestellt werden, dass der Baum während des Fallens nicht mit dem Fallkerbdach auf der Fallkerbsohle aufsitzen kann und der Baumstamm beim Aufsitzen in Längsachse aufreißen kann. Der Fällschnitt kann oder sollte ein Zehntel des Durchmessers des Baumstamms, mindestens jedoch 3 Zentimeter (cm) lateral neben dem Fallkerbsohlenschnitt, insbesondere seiner Endlinie beziehungsweise der Fallkerbsehne, angefangen oder angesetzt werden. Dieser horizontale Versatz kann als Bruchleiste bezeichnet werden. Des Weiteren kann oder sollte der Fällschnitt ein Zehntel des Durchmessers des Baumstamms, mindestens jedoch 3 cm oberhalb des Fallkerbsohlenschnitts, insbesondere seiner Endlinie beziehungsweise der Fallkerbsehne angefangen werden. Dieser vertikale Versatz kann als Bruchstufe bezeichnet werden. Eine Endlinie des Fällschnitts, die als Bruchsehne bezeichnet werden kann, kann oder sollte parallel zur Fallkerbsehne verlaufen. Bruchleiste und -stufe können ein Scharnier bilden, welches den Baum während Fällarbeiten halten kann und beim Fallen sicher führen kann. Ein Anschneiden der Bruchleiste und/oder der Bruchstufe kann zu einer Abweichung von der vorgesehenen Fallrichtung führen. Des Weiteren kann oder sollte der Fällschnitt waagrecht in den Baum beziehungsweise in seinen Baumstamm und/oder parallel zu dem Fallkerbsohlenschnitt verlaufen.

In einer Weiterbildung der Erfindung weist die Schneidinformation zum Ausführen des zweiten Schnitts auf: den mindestens einen Teil des idealen Verlauf des zweiten Schnitts und/oder eine ideale Position und/oder eine ideale Orientierung eines den zweiten Schnitt ausführenden Schneidgeräts basierend auf dem mindestens einen vorausberechneten Teil des idealen Verlaufs. Insbesondere kann die Schneidinformation aufweisen, wo und/oder wie am Baum mit dem Ausführen des zweiten Schnitts angefangen und/oder das Ausführen beendet werden kann oder soll. Die ideale Position kann eine Anfangsposition oder eine Endposition sein. Die ideale Orientierung kann eine Anfangsorientierung oder eine Endorientierung sein. Insbesondere können/kann die ideale Position und/oder die ideale Orientierung basierend auf dem mindestens einen vorausberechneten Teil des idealen Verlaufs vorausberechnet werden, insbesondere zeitgleich mit dem Schritt b) und/oder zeitlich nach diesem und/oder zeitlich vor dem Schritt c) oder zeitgleich mit diesem.

In einer Weiterbildung der Erfindung wird im Schritt c) die Schneidinformation optisch, akustisch und/oder haptisch ausgegeben. Dies kann dem Forstarbeiter eine relativ gute Wahrnehmung der Schneidinformation ermöglichen. Insbesondere kann das optische Ausgeben ein Anzeigen aufweisen. Das optische Ausgeben kann ein Einblenden oder Projizieren der Schneidinformation in ein Sichtfeld des Forstarbeiters aufweisen. Das optische Ausgeben kann ein Projizieren der Schneidinformation auf den Baum aufweisen. Das haptische Ausgeben kann ein Vibrieren aufweisen.

Des Weiteren bezieht sich die Erfindung auf ein System zum Assistieren beim Ausführen der Schnittfolge in den Baum, wobei bei der Schnittfolge auf den ersten Schnitt in den Baum der zweite Schnitt in den Baum folgt, wobei der mindestens eine Teil des idealen Verlauf des zweiten Schnitts von dem mindestens einen Teil des Verlaufs des ersten Schnitts abhängt. Das System kann insbesondere zum Ausführen des zuvor beschriebenen Verfahrens ausgebildet sein. Das erfindungsgemäße System weist eine Erfassungseinrichtung, eine Vorausberechnungseinrichtung und eine Ausgabeeinrichtung auf. Die Erfassungseinrichtung ist zum Erfassen mindestens des Teils des Verlaufs des ersten Schnitts in den Baum ausgebildet. Die Vorausberechnungseinrichtung ist zum Vorausberechnen mindestens des Teils des idealen Verlaufs des zweiten Schnitts in den Baum basierend auf dem erfassten Teil des Verlaufs des ersten Schnitts ausgebildet. Die Ausgabeeinrichtung ist zum Ausgeben der Schneidinformation zum Ausführen des zweiten Schnitts basierend auf dem vorausberechneten Teil des idealen Verlaufs des zweiten Schnitts ausgebildet. Das System ist zum Bereitstellen der geometrischen Eigenschaft des Baums ausgebildet. Die Vorausberechnungseinrichtung ist zum Vorausberechnen mindestens des Teils des idealen Verlaufs des zweiten Schnitts in Abhängigkeit von der bereitgestellten geometrischen Eigenschaft ausgebildet. Das System ist zum Erfassen mindestens eines Teils eines Verlaufs des zweiten Schnitts während seines Ausführens und/oder zum Erfassen einer Position und/oder einer Orientierung eines den zweiten Schnitt ausführenden Schneidgeräts während des Ausführens ausgebildet. Das System ist zum Vergleichen des erfassten Teils mit dem vorausberechneten Teil des idealen Verlaufs des zweiten Schnitts und/oder zum Vergleichen der erfassten Position und/oder der erfassten Orientierung des Schneidgeräts mit einer idealen Position und/oder einer idealen Orientierung des Schneidgeräts basierend auf dem vorausberechneten Teil des idealen Verlaufs ausgebildet. Das System ist zum Ausgeben einer weiteren Schneidinformation zum Ausführen des zweiten Schnitts basierend auf dem Vergleich während des Erfassens mindestens des Teils des Verlaufs des zweiten Schnitts und/oder des Erfassens der Position und/oder der Orientierung des den zweiten Schnitt ausführenden Schneidgeräts ausgebildet.

Das System kann die gleichen Vorteile ermöglichen wie das zuvor beschriebene Verfahren.

Insbesondere kann die Vorausberechnungseinrichtung einen Prozessor, insbesondere eine CPU, aufweisen oder sein.

In einer Weiterbildung der Erfindung weist das System das Schneidgerät auf, das zum Ausführen des ersten Schnitts und/oder des zweiten Schnitts ausgebildet ist. Insbesondere kann das Schneidgerät als ein handgetragenes Schneidgerät ausgebildet sein. Handgetragenes Schneidgerät kann bedeuten, dass das Schneidgerät eine maximale Masse von 50 Kilogramm (kg), insbesondere von 20 kg, insbesondere von 10 kg, aufweisen kann. An dem Schneidgerät können/kann die Erfassungseinrichtung und/oder die Ausgabeeinrichtung angeordnet sein.

In einer Weiterbildung der Erfindung weist das Schneidgerät eine Säge auf oder ist eine Säge. Insbesondere kann die Säge eine Motorsäge und/oder eine Kettensäge aufweisen oder sein.

In einer Weiterbildung der Erfindung weist die Erfassungseinrichtung eine Kamera und/oder eine inertiale Messeinheit und/oder die Wasserwaage und/oder den Kompass und/oder ein lokales Positionsbestimmungsgerät und/oder ein Satelliten-Positionsbestimmungsgerät auf. Die Kamera kann eine Stereokamera und/oder eine TOF-Kamera für Tiefeninformation aufweisen. TOF-Kameras sind 3D-Kamerasysteme, die mit dem Laufzeitverfahren (Englisch: time of flight) Distanzen messen können. Die inertiale Messeinheit kann mindestens einen Beschleunigungssensor und/oder mindestens einen Drehratensensor aufweisen. Die Wasserwaage kann als eine elektrische beziehungsweise digitale Wasserwaage ausgebildet sein. Der Kompass kann als ein elektrischer oder digitaler Kompass ausgebildet sein. Vorteilhafterweise kann das lokale Positionierungssystemgerät auf einer oder mehreren verschiedenen Technologien basieren wie Abstandsmessungen zu Knotenpunkten, optischen Signalen, Radiowellen, magnetischen Feldern, akustischen Signalen, Ultrabreitband, Bluetooth, WLAN, Ultraschall und/oder RFID. Das Satelliten-Positionsbestimmungsgerät kann für eines oder mehrere Satelliten-Positionsbestimmungssysteme wie NAVSTAR GPS, GLONASS, Galileo und/oder BeiDou ausgebildet sein. Zusätzlich oder alternativ kann das Satelliten-Positionsbestimmungsgerät als ein RTK-Satelliten-Positionsbestimmungsgerät (Englisch: real time kinematic) und/oder als ein differentielles Satelliten-Positionsbestimmungsgerät ausgebildet sein.

In einer Weiterbildung der Erfindung weist die Ausgabeeinrichtung eine Anzeige, einen Schallerzeuger und/oder eine Vibrationseinrichtung auf oder ist ein/e solche/r. Insbesondere kann die Anzeige dazu ausgebildet sein, die Schneidinformation in dem Sichtfeld des Forstarbeiters, insbesondere vor dem Baum, anzuzeigen und/oder in dieses zu projizieren oder einzublenden, insbesondere vor und/oder während einem Ausführen des zweiten Schnitts durch den Forstarbeiter. Die Anzeige kann auf Englisch als Head-up-Display bezeichnet werden. Dies kann auf Englisch als Virtual Reality und/oder als Augmented Reality bezeichnet werden.

In einer Weiterbildung der Erfindung weist das System einen Schutzhelm, einen Gesichts- und/oder Gehörschutz, eine Schutzbrille, einen Schutzhandschuh, eine Smartwatch, ein Armband oder ein Armreif, an welchem/welcher die Ausgabeeinrichtung angeordnet ist. Dies ermöglicht das Tragen der Ausgabeeinrichtung am Körper des Forstarbeiters. Insbesondere kann die Anzeige, soweit vorhanden, dazu ausgebildet sein, die Schneidinformation auf einem Visier des Schutzhelms, des Gesichts- und/oder Gehörschutz und/oder der Schutzbrille, soweit vorhanden, anzuzeigen oder in diese zu projizieren. Die Anzeige kann auf Englisch als Headmounted-Display bezeichnet werden. An dem Schutzhelm, dem Gesichts- und/oder Gehörschutz, der Schutzbrille, dem Schutzhandschuh, der Smartwatch, dem Armband oder dem Armreif, soweit vorhanden, kann die Erfassungseinrichtung angeordnet sein.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: ein Ablaufdiagramm eines erfindungsgemäßen Verfahrens,
- Fig. 2: eine Perspektivansicht eines erfindungsgemäßen Systems mit einem Schneidgerät beim Ausführen einer Schnittfolge in einen Baum nach einem ersten Schnitt und vor einem zweiten Schnitt ,
- Fig. 3: eine weitere Perspektivansicht des Systems der Fig. 2 beim Ausführen der Schnittfolge in den Baum während des zweiten Schnitts,
- Fig. 4: eine Längsschnittansicht des Schneidgeräts der Fig. 2 und
- Fig. 5: eine Längsschnittansicht eines weiteren unter Spannung stehenden Baums.

### DETAILLIERTE BESCHREIBUNG DER AUSFÜHRUNGSBEISPIELE

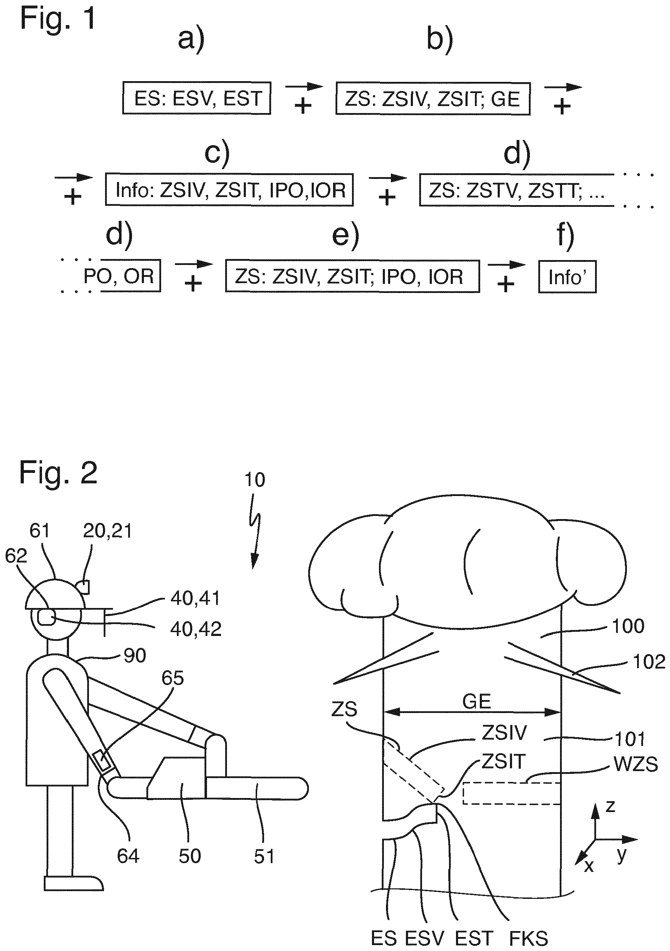

Fig. 1 zeigt ein erfindungsgemäßes Verfahren zum Assistieren beim Ausführen einer Schnittfolge in einen Baum 100, wobei bei der Schnittfolge auf einen ersten Schnitt ES in den Baum 100 ein zweiter Schnitt ZS in den Baum 100 folgt, wobei mindestens ein Teil ZSIT eines idealen Verlaufs ZSIV des zweiten Schnitts ZS von mindestens einem Teil EST eines Verlaufs ESV des ersten Schnitts ES abhängt. Das Verfahren weist die Schritte auf: a) Erfassen des mindestens einen Teils EST des Verlaufs ESV des ersten Schnitts ES in den Baum 100. b) Vorausberechnen des mindestens einen Teils ZSIT des idealen Verlaufs ZSIV des zweiten Schnitts ZS in den Baum 100 basierend auf dem erfassten Teil EST des Verlaufs ESV des ersten Schnitts ES. c) Ausgeben einer Schneidinformation Info zum Ausführen des zweiten Schnitts ZS basierend auf dem vorausberechneten Teil ZSIT des idealen Verlaufs ZSIV des zweiten Schnitts ZS.

Fig. 2 bis 4 zeigen ein erfindungsgemäßes System 10 zum Assistieren beim Ausführen der Schnittfolge in den Baum 100, wobei bei der Schnittfolge auf den ersten Schnitt ES in den Baum 100 der zweite Schnitt ZS in den Baum 100 folgt, wobei mindestens der Teil ZSIT des idealen Verlaufs ZSIV des zweiten Schnitts ZS von mindestens dem Teil EST des Verlaus ESV des ersten Schnitts ES abhängt. Das System 10 ist insbesondere zum Ausführen des zuvor beschriebenen Verfahrens ausgebildet. Das System 10 weist eine Erfassungseinrichtung 20, eine Vorausberechnungseinrichtung 30 und eine Ausgabeeinrichtung 40 auf. Die Erfassungseinrichtung 20 ist zum Erfassen des mindestens einen Teils EST des Verlaufs ESV des ersten Schnitts ES in den Baum 100 ausgebildet. Die Vorausberechnungseinrichtung 30 ist zum Vorausberechnen des mindestens einen Teils ZSIT des idealen Verlaufs ZSIV des zweiten Schnitts ZS in den Baum 100 basierend auf dem erfassten Teil EST des Verlaufs ESV des ersten Schnitts ES ausgebildet. Die Ausgabeeinrichtung 40 ist zum Ausgeben der Schneidinformation Info zum Ausführen des zweiten Schnitts ZS basierend auf dem vorausberechneten Teil ZSIT des idealen Verlaufs ZSIV des zweiten Schnitts ZS ausgebildet.

Des Weiteren weist das System 10 ein Schneidgerät 50 auf. Das Schneidgerät 50 ist zum Ausführen des ersten Schnitts ES und des zweiten Schnitts ZS ausgebildet. Im Detail weist das Schneidgerät 50 eine Säge 51 auf, insbesondere eine motorangetriebene Kettensäge.

Außerdem weist die Erfassungseinrichtung 20 eine Kamera 21, eine inertiale Messeinheit 22, eine Wasserwaage 23, einen Kompass 24, ein lokales Positionsbestimmungsgerät 25 und ein Satelliten-Positionsbestimmungsgerät 26 auf. In alternativen Ausführungsbeispielen kann es ausreichen, wenn die Erfassungseinrichtung entweder die Kamera oder die inertiale Messeinheit oder die Wasserwaage oder den Kompass oder das lokale Positionsbestimmungsgerät oder das Satelliten-Positionsbestimmungsgerät aufweisen kann.

Weiter weist das System 10 einen Schutzhelm 61, einen Gesichts- und/oder Gehörschutz 62, einen Schutzhandschuh 64 und eine Smartwatch 65 auf. Im gezeigten Ausführungsbeispiel ist die Kamera 21 an dem Schutzhelm 61 angeordnet, wie in Fig. 2 zu erkennen. In alternativen Ausführungsbeispielen kann die Erfassungseinrichtung zusätzlich oder alternativ an dem Gesichts- und/oder Gehörschutz, dem Schutzhandschuh und/oder der Smartwatch angeordnet sein. Weiter kann in alternativen Ausführungsbeispielen das System eine Schutzbrille, ein Armband oder einen Armreif aufweisen, an welchem/welcher die Erfassungseinrichtung angeordnet sein kann.

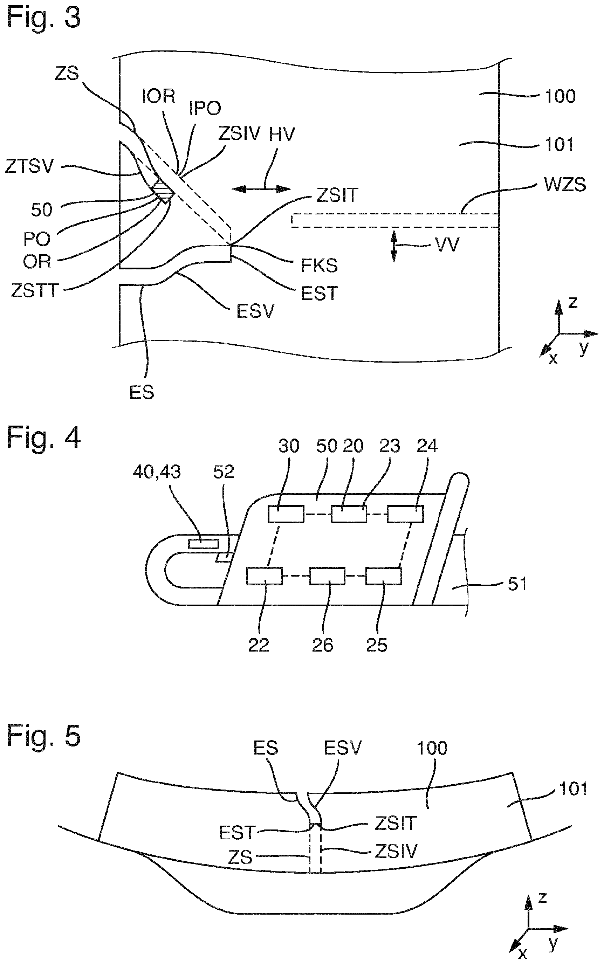

Zudem sind im gezeigten Ausführungsbeispiel an dem Schneidgerät 50 beziehungsweise in dem Schneidgerät 50 die inertiale Messeinheit 22, die Wasserwaage 23, der Kompass 24, das lokale Positionsbestimmungsgerät 25 und das Satelliten-Positionsbestimmungsgerät 26 angeordnet, wie in Fig. 4 zu erkennen.

Entsprechend weist der Schritt a) auf: Erfassen des mindestens einen Teils EST des Verlaufs ESV des ersten Schnitts ES und Erfassen einer Position PO und einer Orientierung OR des den ersten Schnitt ES ausführenden Schneidgeräts 50, mittels optischen Erfassens, insbesondere mittels der Kamera 21, mittels inertialen Messens, insbesondere mittels der inertialen Messeinheit 22, mittels der Wasserwaage 23, mittels des Kompass 24, mittels lokalen Positionsbestimmens, insbesondere mittels des lokalen Positionsbestimmungsgeräts 25, und mittels Satelliten-Positionsbestimmens, insbesondere mittels des Satelliten-Positionsbestimmungsgeräts 26. In alternativen Ausführungsbeispielen kann es ausreichen, wenn der Schritt a) aufweisen kann: entweder Erfassen des Teils des Verlaufs des ersten Schnitts oder Erfassen der Position und/oder der Orientierung des den ersten Schnitt ausführenden Schneidgeräts. Weiter kann es in alternativen Ausführungsbeispielen ausreichen, wenn der Schritt a) aufweisen kann: Erfassen entweder mittels optischen Erfassens oder mittels inertialen Messens oder mittels der Wasserwaage oder mittels des Kompass oder mittels lokalen Positionsbestimmens oder mittels Satelliten-Positionsbestimmens.

Im gezeigten Ausführungsbeispiel trägt ein Forstarbeiter 90 den Schutzhelm 61 und das Schneidgerät 50, wie in Fig. 2 zu erkennen. Der Forstarbeiter 90 kann um den Baum 100 herumgehen. Dabei kann der Verlauf ESV des ersten Schnitts ES aus verschiedenen Erfassungspositionen mittels der Kamera 21 optisch erfasst werden.

Des Weiteren wird beim Erfassen der Position PO und der Orientierung OR des den ersten Schnitt ausführenden Schneidgeräts 50 mittels der inertialen Messeinheit 22, der Wasserwaage 23, des Kompass 24, des lokalen Positionsbestimmungsgeräts 25 und des Satelliten-Positionsbestimmungsgeräts 26 eine räumliche Ausdehnung beziehungsweise ein räumliche Erstreckung des Schneidgeräts 50 berücksichtigt, insbesondere eine Ausdehnung einer Führungsschiene beziehungsweise eines Kettenschwerts der Säge 51.

Außerdem weist das Schneidgerät 50 eine Betätigungstaste 52 in Form eines Gashebels auf. Mittels Erfassen eines Betätigens der Betätigungstaste 52 kann ein Ausführen des ersten Schnitts ES mittels des Schneidgeräts 50 erfasst werden.

Weiter weist das Verfahren den Schritt auf: Bereitstellen einer geometrischen Eigenschaft GE des Baums 100. Der Schritt b) weist auf: Vorausberechnen mindestens des einen Teils ZSIT des idealen Verlaufs ZSIV des zweiten Schnitts ZS in Abhängigkeit von der bereitgestellten geometrischen Eigenschaft GE.

Im gezeigten Ausführungsbeispiel weist die geometrische Eigenschaft GE einen Durchmesser des Baums 100 beziehungsweise seines Baumstamms 101 auf. Die geometrische Eigenschaft GE wird mittels der Kamera 21 erfasst. Zusätzlich werden eine Position und eine Orientierung des Baums 100 mittels der Kamera 21 erfasst, insbesondere beim Herumgehen um den Baum.

Zudem ist die Vorausberechnungseinrichtung 30 an dem beziehungsweise in dem Schneidgerät 50 angeordnet.

Des Weiteren weist die Ausgabeeinrichtung 40 eine Anzeige 41, einen Schallerzeuger 42 und eine Vibrationseinrichtung 43 auf. In alternativen Ausführungsbeispielen kann es ausreichen, wenn die Ausgabeeinrichtung entweder die Anzeige oder den Schallerzeuger oder die Vibrationseinrichtung aufweisen kann.

Im gezeigten Ausführungsbeispiel ist die Anzeige 41 an dem Schutzhelm 61 angeordnet. Im Detail weist der Schutzhelm 61 ein Visier auf. Die Anzeige 41 ist dazu ausgebildet, die Schneidinformation Info auf dem Visier des Schutzhelms 61 in einem Sichtfeld des Forstarbeiters 90, insbesondere vor dem Baum 100, anzuzeigen beziehungsweise in das Sichtfeld vor den Baum 100 zu projizieren. In alternativen Ausführungsbeispielen kann die Anzeige woanders angeordnet sein.

Außerdem ist im gezeigten Ausführungsbeispiel der Schallerzeuger 42 an dem Gesichts- und/oder Gehörschutz 62 angeordnet. In alternativen Ausführungsbeispielen kann der Schallerzeuger woanders angeordnet sein.

Weiter ist im gezeigten Ausführungsbeispiel die Vibrationseinrichtung 43 an dem Schneidgerät 50 angeordnet. In alternativen Ausführungsbeispielen kann die Vibrationseinrichtung woanders angeordnet sein.

Entsprechend wird im Schritt c) die Schneidinformation Info optisch, akustisch und haptisch ausgegeben. In alternativen Ausführungsbeispielen kann es ausreichen, wenn die Schneidinformation entweder optisch oder akustisch oder haptisch ausgegeben werden kann.

Im Ausführungsbeispiel der Fig. 2 und 3 ist der erste, insbesondere ausgeführte, Schnitt ES ein Fallkerbsohlenschnitt in den Baum 100 beziehungsweise in seinen Baumstamm 101. Der zweite Schnitt ZS ist ein Fallkerbdachschnitt. Ein weiterer zweiter Schnitt WZS ist ein Fällschnitt. Der Fallkerbsohlenschnitt ES, der Fallkerbdachschnitt ZS und der Fällschnitt WZS können ein Fällen des, insbesondere stehenden, Baums 100 ermöglichen.

Der Schritt b) weist auf: Vorausberechnen mindestens des Teils ZSIT des idealen Verlaufs ZSIV des zweiten Schnitts ZS derart, dass der Fallkerbdachschnitt als zweiter Schnitt ZS den Fallkerbsohlenschnitt als ersten Schnitt ES in einer Fallkerbsehne FKS trifft. Zusätzlich weist der Schritt b) auf: Vorausberechnen mindestens des Teils des idealen Verlaufs des weiteren zweiten Schnitts WZS derart, dass der Fällschnitt als weiterer zweiter Schnitt WZS einen horizontalen Versatz HV und einen vertikalen Versatz VV zu dem Fallkerbsohlenschnitt oder dem Fallkerbdachschnitt als ersten Schnitt ES oder zweiten Schnitt ZS aufweist.

In alternativen Ausführungsbeispielen kann der Fallkerbdachschnitt der erste Schnitt sein und der Fallkerbsohlenschnitt kann der zweite Schnitt sein. Der Schritt b) kann aufweisen: Vorausberechnen mindestens des Teils des idealen Verlaufs des zweiten Schnitts derart, dass der Fallkerbsohlenschnitt als zweiter Schnitt den Fallkerbdachschnitt als ersten Schnitt in der Fallkerbsehne treffen kann.

Im gezeigten Ausführungsbeispiel der Fig. 2 und 3 hatte der Forstarbeiter 90 geplant, den Fallkerbsohlenschnitt waagrecht in den Baum zu schneiden. Tatsächlich verläuft der Fallkerbsohlenschnitt ES jedoch in einem mittleren Teil leicht nach oben. Der Fallkerbdachschnitt sollte unter einem Winkel von mindestens 45 Grad zur Waagrechten oder zum Fallkerbsohlenschnitt verlaufen, um so eine ausreichend große Öffnung durch einen gebildeten Fallkerb im Baum zu bekommen. Denn so kann sichergestellt werden, dass der Baum während des Fallens nicht mit einem Fallkerbdach auf einer Fallkerbsohle aufsitzen kann und der Baumstamm dadurch in Längsachse aufreißen kann.

Aufgrund des, insbesondere tatsächlichen, Verlaufs ESV des Fallkerbsohlenschnitts als erster Schnitt ES sollte der ideale Verlauf ZSIV des Fallkerbdachschnitts als zweiter Schnitt ZS in Fig. 2 und 3 relativ höher am Baum 100 beziehungsweise seinem Baumstamm 101 anfangen als ursprünglich von dem Forstarbeiter 90 geplant. Somit können sich der Fallkerbsohlenschnitt als erster Schnitt ES beziehungsweise sein Verlauf ESV und der Fallkerbdachschnitt als zweiter Schnitt ZS beziehungsweise sein idealer Verlauf ZSIV genau in der Fallkerbsehne FKS treffen. Dann können der Fallkerbsohlenschnitt und der Fallkerbdachschnitt einen idealen Fallkerb bilden, insbesondere zum sicheren Fällen des Baums 100.

Der Fällschnitt WZS kann oder sollte ein Zehntel des Durchmessers GE des Baumstamms 101, mindestens jedoch 3 cm, lateral neben dem Fallkerbsohlenschnitt als ersten Schnitt ES beziehungsweise seinem Verlauf ESV oder der Fallkerbsehne FKS angefangen werden. Dieser horizontale Versatz HV kann als Bruchleiste bezeichnet werden. Des Weiteren kann oder sollte der Fällschnitt als weiterer zweiter Schnitt WZS ein Zehntel des Durchmessers GE des Baumstamms 101, mindestens jedoch 3 cm, oberhalb des Fallkerbsohlenschnitts als ersten Schnitt ES beziehungsweise seines Verlaufs ESV oder der Fallkerbsehne FKS angefangen werden. Dieser vertikale Versatz VV kann als Bruchstufe bezeichnet werden.

Aufgrund des, insbesondere tatsächlichen, Verlaufs ESV des Fallkerbsohlenschnitts als ersten Schnitt ES sollte der Fällschnitt als weiterer zweiter Schnitt WZS in Fig. 2 und 3 relativ höher am Baum 100 beziehungsweise seinem Baumstamm 101 anfangen als ursprünglich von dem Forstarbeiter 90 geplant Somit können Bruchleiste und Bruchstufe ein Scharnier bilden, welches den Baum 100 während Fällarbeiten halten kann und beim Fallen sicher führen kann.

Im gezeigten Ausführungsbeispiel ist die Vorausberechnungseinrichtung 30 dazu ausgebildet, aus dem erfassten Teil EST des Verlaufs ESV des ersten Schnitts ES, insbesondere mittels Datenverarbeitens, seine Schnittart zu erkennen, in diesem Fall Fallkerbsohlenschnitt. In alternativen Ausführungsbeispielen kann das System dazu ausgebildet sein, dass der Forstarbeiter mitteilen oder auswählen kann, welche Art von Schnitt, insbesondere aktuell, ausgeführt wird. Des Weiteren kennt im gezeigten Ausführungsbeispiel die Vorausberechnungseinrichtung 30 die Schnittfolge. Somit kennt die Vorausberechnungseinrichtung 30, dass auf den Fallkerbsohlenschnitt als ersten Schnitt ES der Fallkerbdachschnitt ZS als zweiter Schnitt folgt. In alternativen Ausführungsbeispielen kann auch dies mitgeteilt oder ausgewählt werden. Außerdem kennt die Vorausberechnungseinrichtung, dass auf den Fallkerbdachschnitt als zweiten Schnitt ZS der Fällschnitt als weiterer zweiter Schnitt WZS folgt.

Im Detail weist die Schneidinformation Info zum Ausführen des zweiten Schnitts ZS auf: den mindestens einen Teil ZSIT des idealen Verlaufs ZSIV des zweiten Schnitts ZS und eine ideale Position IPO und eine ideale Orientierung IOR des den zweiten Schnitt ZS ausführenden Schneidgeräts 50 basierend auf dem mindestens einen vorausberechneten Teil ZSIT des idealen Verlaufs ZSIV. Die ideale Position IPO und die ideale Orientierung IOR werden basierend auf dem mindestens einen vorausberechneten Teil ZSIT des idealen Verlaufs ZSIV des zweiten Schnitts ZS vorausberechnet, insbesondere mittels der Vorausberechnungseinrichtung 30. In alternativen Ausführungsbeispielen kann es ausreichen, wenn die Schneidinformation zum Ausführen des zweiten Schnitts aufweisen kann: entweder den mindestens einen Teil des idealen Verlaufs des zweiten Schnitts oder die ideale Position oder die ideale Orientierung des den zweiten Schnitt ausführenden Schneidgeräts.

Im gezeigten Ausführungsbeispiel weist die Schneidinformation Info im Detail auf, wo und wie am Baum 100 beziehungsweise seinem Baumstamm 101 mit dem Ausführen des zweiten Schnitts ZS angefangen werden soll. Insbesondere wird die Schneidinformation Info in dem Sichtfeld des Forstarbeiters 90, insbesondere vor dem Baum 100, angezeigt.

Des Weiteren weist das Verfahren die Schritte auf: d) Erfassen mindestens eines Teils ZSTT eines, insbesondere tatsächlichen, Verlaufs ZSTV des zweiten Schnitts ZS während seines Ausführens und/oder Erfassen der Position PO und/oder der Orientierung OR des den zweiten Schnitt ZS ausführenden Schneidgeräts 50 während des Ausführens. e) Vergleichen des erfassten Teils ZSTT mit dem vorausberechneten Teil ZSIT des idealen Verlaufs ZSIV des zweiten Schnitts ZS und/oder Vergleichen der erfassten Position PO und/oder der erfassten Orientierung OR des Schneidgeräts 50 mit einer idealen Position IPO und/oder einer idealen Orientierung IOR des Schneidgeräts 50 basierend auf dem vorausberechneten Teil ZSIT des idealen Verlaufs ZSV. f) Ausgeben einer weiteren Schneidinformation Info' zum Ausführen des zweiten Schnitts ZS basierend auf dem Vergleich während des Schritts d).

Im gezeigten Ausführungsbeispiel der Fig. 3 weicht der Verlauf ZSTV des zweiten Schnitts ZS nach unten von dem vorausberechneten idealen Verlauf ZSIV des zweiten Schnitts ZS ab. Die weitere Schneidinformation Info' weist eine Anweisung zum Zurückkehren auf den idealen Verlauf ZSIV auf. In diesem Fall eine Anweisung zum Zurückkehren nach oben. Insbesondere wird die weitere Schneidinformation Info' in das Sichtfeld des Forstarbeiters 90 projiziert, insbesondere mittels eines nach oben zeigenden Pfeils. Durch das Zurückkehren auf den idealen Verlauf ZSIV des zweiten Schnitts ZS kann sichergestellt werden, dass der Baum 100 während des Fallens nicht mit dem Fallkerbdach auf der Fallkerbsohle aufsitzen kann und der Baumstamm 101 dadurch in Längsachse aufreißen kann.

Das Ausführungsbeispiel der Fig. 5 zeigt einen gefällten, insbesondere liegenden, Baum 100 beziehungsweise einen Baumstamm 101. Der Baum 100 beziehungsweise sein Baumstamm 101 stehen unter Spannung. Im Ausführungsbeispiel der Fig. 5 ist eine Oberseite des Baums 100 eine Druckseite und eine Unterseite des Baums 100 ist eine Zugseite. Der erste Schnitt ES ist ein Entlastungsschnitt. Der Entlastungsschnitt führt auf der Druckseite in den Baum 100. Der zweite Schnitt ZS ist ein Trennschnitt. Der Trennschnitt sollte auf der Zugseite in den Baum 100 führen. Der Schritt b) weist auf: Vorausberechnen mindestens des Teils ZSIT des idealen Verlaufs ZSIV des zweiten Schnitts ZS derart, dass der Trennschnitt als zweiter Schnitt ZS den Entlastungsschnitt als ersten Schnitt ES trifft.

Im gezeigten Ausführungsbeispiel sollte der Entlastungsschnitt als erster Schnitt ursprünglich von oben nach unten in den Baum verlaufen. Tatsächlich verläuft der Entlastungsschnitt als erster Schnitt ES jedoch leicht nach rechts unten. Somit muss der Trennschnitt als zweiter Schnitt ZS in Fig. 5 weiter rechts am Baum 100 angefangen werden als ursprünglich geplant, um den Entlastungsschnitt als ersten Schnitt ES zu treffen. Dies ermöglicht ein sicheres Durchtrennen des unter Spannung stehenden Baums 100 beziehungsweise seines unter Spannung stehenden Baumstamms 101.

Des Weiteren können das zuvor beschriebene Verfahren und das zuvor beschrieben System ein sicheres Durchtrenn von Ästen 102, wie in Fig. 2 gezeigt, ermöglichen.

Wie die gezeigten und oben erläuterten Ausführungsbeispiele deutlich machen, stellt die Erfindung ein vorteilhaftes Verfahren zum Assistieren beim Ausführen einer Schnittfolge in einen Baum und ein vorteilhaftes System zum Assistieren beim Ausführen einer Schnittfolge in einen Baum bereit, das jeweils eine Sicherheit beim Ausführen der Schnittfolge verbessert und/oder ein Vermeiden von ungewollten Schäden, insbesondere des Baums, erleichtert.

## Patentansprüche

1. Verfahren zum Assistieren beim Ausführen einer Schnittfolge in einen Baum (100), wobei bei der Schnittfolge auf einen ersten Schnitt (ES) in den Baum ein zweiter Schnitt (ZS) in den Baum folgt, wobei mindestens ein Teil (ZSIT) eines idealen Verlaufs (ZSIV) des zweiten Schnitts von mindestens einem Teil (EST) eines Verlaufs (ESV) des ersten Schnitts abhängt, wobei das Verfahren die Schritte aufweist:
a) Erfassen mindestens des Teils (EST) des Verlaufs (ESV) des ersten Schnitts (ES) in den Baum (100),
b) Vorausberechnen mindestens des Teils (ZSIT) des idealen Verlaufs (ZSIV) des zweiten Schnitts (ZS) in den Baum basierend auf dem erfassten Teil des Verlaufs des ersten Schnitts und
c) Ausgeben einer Schneidinformation (Info) zum Ausführen des zweiten Schnitts basierend auf dem vorausberechneten Teil des idealen Verlaufs des zweiten Schnitts, wobei
- das Verfahren den Schritt aufweist: Bereitstellen einer geometrischen Eigenschaft (GE) des Baums (100),
- der Schritt b) aufweist: Vorausberechnen mindestens des Teils (ZSIT) des idealen Verlaufs (ZSIV) des zweiten Schnitts (ZS) in Abhängigkeit von der bereitgestellten geometrischen Eigenschaft (GE), **dadurch gekennzeichnet, dass**
- das Verfahren die Schritte aufweist:
d) Erfassen mindestens eines Teils (ZSTT) eines Verlaufs (ZSTV) des zweiten Schnitts (ZS) während seines Ausführens und/oder Erfassen einer Position (PO) und/oder einer Orientierung (OR) eines den zweiten Schnitt ausführenden Schneidgeräts (50) während des Ausführens,
e) Vergleichen des erfassten Teils mit dem vorausberechneten Teil (ZSIT) des idealen Verlaufs (ZSIV) des zweiten Schnitts und/oder Vergleichen der erfassten Position und/oder der erfassten Orientierung des Schneidgeräts mit einer idealen Position (IPO) und/oder einer idealen Orientierung (IOR) des Schneidgeräts basierend auf dem vorausberechneten Teil des idealen Verlaufs und
f) Ausgeben einer weiteren Schneidinformation (Info') zum Ausführen des zweiten Schnitts basierend auf dem Vergleich während des Schritt d).

2. Verfahren nach Anspruch 1,
- wobei der Schritt a) aufweist: Erfassen des Teils (EST) des Verlaufs (ESV) des ersten Schnitts (ES) und/oder Erfassen einer Position (PO) und/oder einer Orientierung (OR) eines den ersten Schnitt ausführenden Schneidgeräts (50),
- mittels optischen Erfassens und/oder
- mittels inertialen Messens und/oder
- mittels einer Wasserwage (23) und/oder
- mittels eines Kompass (24) und/oder
- mittels lokalen Positionsbestimmens und/oder
- mittels Satelliten-Positionsbestimmens.

3. Verfahren nach einem der vorhergehenden Ansprüche,
- wobei der erste Schnitt (ES) und/oder der zweite Schnitt (ZS) ausgewählt sind aus einer Gruppe bestehend aus: ein Fallkerbsohlenschnitt, ein Fallkerbdachschnitt, ein Fällschnitt, ein Entlastungsschnitt und ein Trennschnitt.

4. Verfahren nach Anspruch 3,
wobei der Schritt b) aufweist: Vorausberechnen mindestens des Teils (ZSIT) des idealen Verlaufs (ZSIV) des zweiten Schnitts (ZS) derart,
- dass der Fallkerbdachschnitt als zweiter Schnitt (ZS) den Fallkerbsohlenschnitt als ersten Schnitt (ES) in einer Fallkerbsehne (FKS) trifft und/oder
- dass der Fallkerbsohlenschnitt als zweiter Schnitt den Fallkerbdachschnitt als ersten Schnitt in der Fallkerbsehne trifft und/oder
- dass der Fällschnitt als zweiter Schnitt einen horizontalen Versatz (HV) und einen vertikalen Versatz (VV) zu dem Fallkerbsohlenschnitt oder dem Fallkerbdachschnitt als ersten Schnitt aufweist und/oder
- dass der Trennschnitt als zweiter Schnitt den Entlastungsschnitt als ersten Schnitt trifft.

5. Verfahren nach einem der vorhergehenden Ansprüche,
wobei die Schneidinformation (Info) zum Ausführen des zweiten Schnitts (ZS) aufweist:
- den mindestens einen Teil (ZSIT) des idealen Verlauf (ZSIV) des zweiten Schnitts (ZS) und/oder
- eine ideale Position (IPO) und/oder eine ideale Orientierung (IOR) eines den zweiten Schnitt ausführenden Schneidgeräts (50) basierend auf dem mindestens einen vorausberechneten Teil des idealen Verlaufs.

6. Verfahren nach einem der vorhergehenden Ansprüche,
- wobei im Schritt c) die Schneidinformation (Info) optisch, akustisch und/oder haptisch ausgegeben wird.

7. System (10) zum Assistieren beim Ausführen einer Schnittfolge in einen Baum (100), wobei bei der Schnittfolge auf einen ersten Schnitt (ES) in den Baum ein zweiter Schnitt (ZS) in den Baum folgt, wobei mindestens ein Teil (ZSIT) eines idealen Verlauf (ZSIV) des zweiten Schnitts von mindestens einem Teil (EST) eines Verlaufs (ESV) des ersten Schnitts abhängt, das System aufweisend:
- eine Erfassungseinrichtung (20), die zum Erfassen mindestens des Teils (EST) des Verlaufs (ESV) des ersten Schnitts (ES) in den Baum (100) ausgebildet ist,
- eine Vorausberechnungseinrichtung (30), die zum Vorausberechnen mindestens des Teils (ZSIT) des idealen Verlaufs (ZSIV) des zweiten Schnitts (ZS) in den Baum basierend auf dem erfassten Teil des Verlaufs des ersten Schnitts ausgebildet ist, und
- eine Ausgabeeinrichtung (40), die zum Ausgeben einer Schneidinformation (Info) zum Ausführen des zweiten Schnitts basierend auf dem vorausberechneten Teil des idealen Verlaufs des zweiten Schnitts ausgebildet ist, wobei
- das System zum Bereitstellen einer geometrischen Eigenschaft (GE) des Baums (100) ausgebildet ist,
- die Vorausberechnungseinrichtung zum Vorausberechnen mindestens des Teils (ZSIT) des idealen Verlaufs (ZSIV) des zweiten Schnitts (ZS) in Abhängigkeit von der bereitgestellten geometrischen Eigenschaft (GE) ausgebildet ist, **dadurch gekennzeichnet, dass**
- das System zum Erfassen mindestens eines Teils (ZSTT) eines Verlaufs (ZSTV) des zweiten Schnitts (ZS) während seines Ausführens und/oder zum Erfassen einer Position (PO) und/oder einer Orientierung (OR) eines den zweiten Schnitt ausführenden Schneidgeräts (50) während des Ausführens ausgebildet ist,
- das System zum Vergleichen des erfassten Teils mit dem vorausberechneten Teil (ZSIT) des idealen Verlaufs (ZSIV) des zweiten Schnitts und/oder zum Vergleichen der erfassten Position und/oder der erfassten Orientierung des Schneidgeräts mit einer idealen Position (IPO) und/oder einer idealen Orientierung (IOR) des Schneidgeräts basierend auf dem vorausberechneten Teil des idealen Verlaufs ausgebildet ist und
- das System zum Ausgeben einer weiteren Schneidinformation (Info') zum Ausführen des zweiten Schnitts basierend auf dem Vergleich während des Erfassens mindestens des Teils des Verlaufs des zweiten Schnitts und/oder des Erfassens der Position und/oder der Orientierung des den zweiten Schnitt ausführenden Schneidgeräts ausgebildet ist.

8. System (10) nach Anspruch 7, aufweisend:
- ein Schneidgerät (50), das zum Ausführen des ersten Schnitts (ES) und/oder des zweiten Schnitts (ZS) ausgebildet ist.

9. System (10) nach Anspruch 8,
- wobei das Schneidgerät (50) eine Säge (51) aufweist.

10. System (10) nach einem der Ansprüche 7 bis 9,
- die Erfassungseinrichtung (20) aufweisend: eine Kamera (21) und/oder eine inertiale Messeinheit (22) und/oder eine Wasserwaage (23) und/oder einen Kompass (24) und/oder ein lokales Positionsbestimmungsgerät (25) und/oder ein Satelliten-Positionsbestimmungsgerät (26).

11. System (10) nach einem der Ansprüche 7 bis 10,
- wobei die Ausgabeeinrichtung (40) eine Anzeige (41), einen Schallerzeuger (42) und/oder eine Vibrationseinrichtung (43) aufweist.

12. System (10) nach einem der Ansprüche 7 bis 11, aufweisend:
- einen Schutzhelm (61), einen Gesichts- und/oder Gehörschutz (62), eine Schutzbrille, einen Schutzhandschuh (64), eine Smartwatch (65), ein Armband oder ein Armreif, an welchem/welcher die Ausgabeeinrichtung (40) angeordnet ist.

## Claims

1. Method for assisting during execution of a sequence of cuttings in a tree (100), wherein, during the cutting sequence, a first cut (ES) in the tree is followed by a second cut (ZS) in the tree, wherein at least a part (ZSIT) of an ideal course (ZSIV) of the second cut depends on at least a part (EST) of a course (ESV) of the first cut, the method comprising the steps:
a) identifying at least the part (EST) of the course (ESV) of the first cut (ES) in the tree (100),
b) precalculating at least the part (ZSIT) of the ideal course (ZSIV) of the second cut (ZS) in the tree based on the identified part of the course of the first cut and
c) outputting cutting information (Info) for executing the second cut based on the precalculated part of the ideal course of the second cut,
wherein
- the method comprises the step: providing a geometric property (GE) of the tree (100),
- the step b) includes: precalculating at least the part (ZSIT) of the ideal course (ZSIV) of the second cut (ZS) as a function of the provided geometric property (GE), **characterised in that**
- the method comprising the steps:
d) identifying at least a part (ZSTT) of a course (ZSTV) of the second cut (ZS) during execution thereof and/or identifying a position (PO) and/or an orientation (OR) of a cutting apparatus (50) executing the second cut during execution thereof,
e) comparing the identified part to the precalculated part (ZSIT) of the ideal course (ZSIV) of the second cut and/or comparing the identified position and/or the identified orientation of the cutting apparatus to an ideal position (IPO) and/or an ideal orientation (IOR) of the cutting apparatus based on the precalculated part of the ideal course and
f) outputting further cutting information (Info') for executing the second cut based on the comparison during step d).

2. Method according to claim 1,
- wherein the step a) includes: identifying the part (EST) of the course (ESV) of the first cut (ES) and/or identifying a position (PO) and/or an orientation (OR) of a cutting apparatus (50) executing the first cut,
- using optical identification and/or
- using inertial measurement and/or
- using a spirit level (23) and/or
- using a compass (24) and/or
- using local position determination and/or
- using satellite position determination.

3. Method according to any of the preceding claims,
- wherein the first cut (ES) and/or the second cut (ZS) are selected from a group consisting of: a kerf lower cut, a kerf upper cut, a felling cut, a relief cut and a separation cut.

4. Method according to claim 3,
wherein the step b) includes: precalculating at least the part (ZSIT) of the ideal course (ZSIV) of the second cut (ZS) such
- that the kerf upper cut as the second cut (ZS) meets the kerf lower cut as the first cut (ES) in a kerf chord (FKS) and/or
- that the kerf lower cut as the second cut meets the kerf upper cut as the first cut in the kerf chord and/or
- that the felling cut as the second cut has a horizontal offset (HV) and a vertical offset (VV) in relation to the kerf lower cut or the kerf upper cut as the first cut and/or
- that the separation cut as the second cut meets the relief cut as the first cut.

5. Method according to any of the preceding claims,
wherein the cutting information (Info) for executing the second cut (ZS) includes:
- the at least one part (ZSIT) of the ideal course (ZSIV) of the second cut (ZS) and/or
- an ideal position (IPO) and/or an ideal orientation (IOR) of a cutting apparatus (50) executing the second cut based on the at least one precalculated part of the ideal course.

6. Method according to any of the preceding claims,
- wherein in step c) the cutting information (Info) is outputted using optics, acoustics and/or haptics.

7. System (10) for assisting during execution of a sequence of cuttings in a tree (100), wherein, during the cutting sequence, a first cut (ES) in the tree is followed by a second cut (ZS) in the tree, wherein at least a part (ZSIT) of an ideal course (ZSIV) of the second cut depends on at least a part (EST) of a course (ESV) of the first cut, the system comprising:
- an identification device (20) configured to identify at least the part (EST) of the course (ESV) of the first cut (ES) in the tree (100),
- a precalculation device (30) configured to precalculate at least the part (ZSIT) of the ideal course (ZSIV) of the second cut (ZS) in the tree based on the identified part of the course of the first cut, and
- an output device (40) configured to output cutting information (Info) for executing the second cut based on the precalculated part of the ideal course of the second cut,
wherein
- the system is configured to provide a geometric property (GE) of the tree (100),
- the precalculation device is configured to precalculate at least the part (ZSIT) of the ideal course (ZSIV) of the second cut (ZS) as a function of the provided geometric property (GE),
**characterised in that**
- the system is configured to identify at least a part (ZSTT) of a course (ZSTV) of the second cut (ZS) during execution thereof and/or to identify a position (PO) and/or an orientation (OR) of a cutting apparatus (50) executing the second cut during execution thereof,
- the system is configured to compare the identified part to the precalculated part (ZSIT) of the ideal course (ZSIV) of the second cut and/or to compare the identified position and/or the identified orientation of the cutting apparatus to an ideal position (IPO) and/or an ideal orientation (IOR) of the cutting apparatus based on the precalculated part of the ideal course and
- the system is configured to output further cutting information (Info') for executing the second cut based on the comparison during the identifying at least the part of the course of the second cut and/or the identifying the position and/or the orientation of the cutting apparatus executing the second cut.

8. System (10) according to claim 7, comprising:
- a cutting apparatus (50) configured to execute the first cut (ES) and/or the second cut (ZS).

9. System (10) according to claim 8,
- wherein the cutting apparatus (50) includes a saw (51).

10. System (10) according to any of claims 7 to 9,
- the identification device (20) comprising:
a camera (21) and/or an inertial measuring unit (22) and/or a spirit level (23) and/or a compass (24) and/or a local position determination device (25) and/or a satellite position determination device (26).

11. System (10) according to any of claims 7 to 10,
- wherein the output device (40) includes a display (41), a sound generator (42) and/or a vibration device (43).

12. System (10) according to any of claims 7 to 11, comprising:
- a protective helmet (61), a face shield and/or ear protection (62), safety goggles, a protective glove (64), a smartwatch (65), an armband or a wristband or a bracelet, whereon the output device (40) is disposed.

## Revendications

1. Procédé d'assistance lors de l'exécution d'une séquence de coupe sur un arbre (100), dans lequel, lors de la séquence de coupe, une première coupe (ES) sur l'arbre est suivie d'une deuxième coupe (ZS) sur l'arbre, au moins une partie (ZSIT) d'un tracé idéal (ZSIV) de la deuxième coupe dépendant d'au moins une partie (EST) d'un tracé (ESV) de la première coupe, le procédé présentant les étapes consistant à :
a) détecter au moins la partie (EST) du tracé (ESV) de la première coupe (ES) sur l'arbre (100),
b) calculer préalablement au moins la partie (ZSIT) du tracé idéal (ZSIV) de la deuxième coupe (ZS) sur l'arbre sur la base de la partie détectée du tracé de la première coupe, et
c) sortir une information de coupe (Info) servant à l'exécution de la deuxième coupe sur la base de la partie calculée préalablement du tracé idéal de la deuxième coupe,
dans lequel
- le procédé présente l'étape consistant à : fournir une propriété géométrique (GE) de l'arbre (100),
- l'étape b) consistant à : calculer préalablement au moins la partie (ZSIT) du tracé idéal (ZSIV) de la deuxième coupe (ZS) en fonction de la propriété géométrique (GE) fournie,
**caractérisé en ce que**
- le procédé présente les étapes consistant à :
d) détecter au moins une partie (ZSTT) d'un tracé (ZSTV) de la deuxième coupe (ZS) pendant son exécution et/ou détecter une position (PO) et/ou une orientation (OR) d'un outil de coupe (50) exécutant la deuxième coupe pendant l'exécution,
e) comparer la partie détectée avec la partie calculée préalablement (ZSIT) du tracé idéal (ZSIV) de la deuxième coupe et/ou comparer la position détectée et/ou l'orientation détectée de l'outil de coupe avec une position idéale (IPO) et/ou une orientation idéale (IOR) de l'outil de coupe sur la base de la partie calculée préalablement du tracé idéal, et
f) sortir une autre information de coupe (Info') servant à l'exécution de la deuxième coupe sur la base de la comparaison pendant l'étape d).

2. Procédé selon la revendication 1,
- l'étape a) consistant à : détecter la partie (EST) du tracé (ESV) de la première coupe (ES) et/ou détecter une position (PO) et/ou une orientation (OR) d'un outil de coupe (50) exécutant la première coupe,
- au moyen d'une détection optique, et/ou
- au moyen d'une mesure inertielle, et/ou
- au moyen d'un niveau à bulle (23), et/ou
- au moyen d'une boussole (24), et/ou
- au moyen d'un positionnement local, et/ou
- au moyen d'un positionnement par satellite.

3. Procédé selon l'une quelconque des revendications précédentes,
- la première coupe (ES) et/ou la deuxième coupe (ZS) étant sélectionnée(s) dans un groupe comportant : une coupe de base d'entaille d'abattage, une coupe oblique d'entaille d'abattage, une coupe d'abattage, une coupe d'allégement et une coupe de séparation.

4. Procédé selon la revendication 3,
l'étape b) consistant à : calculer préalablement au moins la partie (ZSIT) du tracé idéal (ZSIV) de la deuxième coupe (ZS) de telle sorte que
- la coupe oblique d'entaille d'abattage en tant que deuxième coupe (ZS) rencontre la coupe de base d'entaille d'abattage en tant que première coupe (ES) au niveau d'un trait d'entaille d'abattage (FKS), et/ou
- la coupe de base d'entaille d'abattage en tant que deuxième coupe rencontre la coupe oblique d'entaille d'abattage en tant que première coupe au niveau du trait d'entaille d'abattage, et/ou
- la coupe d'abattage en tant que deuxième coupe rencontre un décalage horizontal (HV) et un décalage vertical (W) par rapport à la coupe de base d'entaille d'abattage ou à la coupe oblique d'entaille d'abattage en tant que première coupe, et/ou
- la coupe de séparation en tant que deuxième coupe rencontre la coupe d'allégement en tant que première coupe.

5. Procédé selon l'une quelconque des revendications précédentes, dans lequel l'information de coupe (Info) servant à l'exécution de la deuxième coupe (ZS) présente :
- ladite au moins une partie (ZSIT) du tracé idéal (ZSIV) de la deuxième coupe (ZS), et/ou
- une position idéale (IPO) et/ou une orientation idéale (IOR) d'un appareil de coupe exécutant la deuxième coupe (50) sur la base de ladite au moins une partie calculée préalablement du tracé idéal.

6. Procédé selon l'une quelconque des revendications précédentes,
- dans lequel, à l'étape c), l'information de coupe (Info) est sortie de manière optique, acoustique et/ou haptique.

7. Système (10) d'assistance lors de l'exécution d'une séquence de coupe sur un arbre (100), dans lequel, lors de la séquence de coupe, une première coupe (ES) sur l'arbre est suivie d'une deuxième coupe (ZS) sur l'arbre, au moins une partie (ZSIT) d'un tracé idéal (ZSIV) de la deuxième coupe dépendant d'au moins une partie (EST) d'un tracé (ESV) de la première coupe, le système présentant :
- un dispositif de détection (20) qui est réalisé pour détecter au moins la partie (EST) du tracé (ESV) de la première coupe (ES) sur l'arbre (100),
- un dispositif de calcul préalable (30) qui est réalisé pour calculer préalablement au moins la partie (ZSIT) du tracé idéal (ZSIV) de la deuxième coupe (ZS) sur l'arbre sur la base de la partie détectée du tracé de la première coupe, et
- un dispositif de sortie (40) qui est réalisé pour sortir une information de coupe (Info) servant à l'exécution de la deuxième coupe sur la base de la partie calculée préalablement du tracé idéal de la deuxième coupe,
dans lequel
- le système est réalisé pour fournir une propriété géométrique (GE) de l'arbre (100),
- le dispositif de calcul préalable est réalisé pour calculer préalablement au moins la partie (ZSIT) du tracé idéal (ZSIV) de la deuxième coupe (ZS) en fonction de la propriété géométrique (GE) fournie, **caractérisé en ce que**
- le système est réalisé pour détecter au moins une partie (ZSTT) d'un tracé (ZSTV) de la deuxième coupe (ZS) pendant son exécution, et/ou pour détecter une position (PO) et/ou une orientation (OR) d'un outil de coupe (50) exécutant la deuxième coupe pendant l'exécution,
- le système est réalisé pour comparer la partie détectée avec la partie calculée préalablement (ZSIT) du tracé idéal (ZSIV) de la deuxième coupe, et/ou pour comparer la position détectée et/ou l'orientation détectée de l'outil de coupe avec une position idéale (IPO) et/ou une orientation (IOR) idéale de l'outil de coupe sur la base de la partie calculée préalablement du tracé idéal, et
- le système est réalisé pour sortir une autre information de coupe (Info') servant à l'exécution de la deuxième coupe sur la base de la comparaison pendant la détection au moins de la partie du tracé de la deuxième coupe et/ou de la détection de la position et/ou de l'orientation de l'appareil de coupe exécutant la deuxième coupe.

8. Système (10) selon la revendication 7, présentant :
- un appareil de coupe (50) qui est réalisé pour exécuter la première coupe (ES) et/ou la deuxième coupe (ZS) .

9. Système (10) selon la revendication 8,
- dans lequel l'appareil de coupe (50) présente une scie (51).

10. Système (10) selon l'une quelconque des revendications 7 à 9,
- le dispositif de détection (20) présentant : une caméra (21) et/ou une unité de mesure inertielle (22) et/ou un niveau à bulle (23) et/ou une boussole (24) et/ou un appareil de positionnement local (25) et/ou un appareil de positionnement par satellite (26).

11. Système (10) selon l'une quelconque des revendications 7 à 10,
- dans lequel le dispositif de sortie (40) présente un affichage (41), un générateur acoustique (42) et/ou un dispositif vibratoire (43).

12. Système (10) selon l'une quelconque des revendications 7 à 11, présentant :
- un casque (61), une protection faciale et/ou auditive (62), des lunettes de protection, un gant de protection (64), une montre intelligente (65), un brassard ou bracelet sur lequel est disposé le dispositif de sortie (40).
